# EUROPÄISCHE PATENTSCHRIFT

(11) **EP 1 226 481 B1**
(45) Veröffentlichungstag und Bekanntmachung des Hinweises auf die Patenterteilung: **18.12.2013**
(21) Anmeldenummer: 00945567.6
(22) Anmeldetag: 25.05.2000
(51) Int. Cl.: G06F 1/00

(54) **VERFAHREN ZUR BEDIENUNG EINES GERÄTS**
METHOD FOR OPERATING AN APPLIANCE
PROCEDE D'UTILISATION D'UN APPAREIL

(30) Priorität: 12.10.1999 DE 19949174
(43) Veröffentlichungstag der Anmeldung: 31.07.2002
(73) Patentinhaber: Hewlett-Packard Development Company, L.P., Houston, TX 77707 (US)
(72) Erfinder: ZECHLIN, Oliver, D-90547 Stein (DE)
(74) Vertreter: Samson & Partner
(86) Internationale Anmeldenummer: PCT/DE2000/001690
(87) Internationale Veröffentlichungsnummer: WO 2001/027721

(56) Entgegenhaltungen:
- WO-A-99/26124
- WO-A-99/49382

## Beschreibung

Die Erfindung betrifft ein Verfahren zur Bedienung eines Geräts mit einer mobilen Eingabeeinrichtung. Die Erfindung betrifft darüber hinaus eine Eingabeeinrichtung, ein Gerät und eine Codiereinrichtung sowie ein aus diesen Komponenten bestehendes System zur Durchführung des Verfahrens.

Die meisten Geräte, einschließlich Datenverarbeitungsgeräte in den verschiedensten Größen, wie PC's, Laptops, PDA's etc. oder auch Terminals, das heißt Ein- und Ausgabegeräte von größeren Rechnersystemen oder anderen Geräten, bieten üblicherweise unabhängig vom jeweiligen Benutzer bzw. Bediener die gleichen Funktionen an. Insbesondere sind bei Geräten mit einem entsprechenden Display die Benutzeroberflächen meist unabhängig vom Bediener gleich.

Um das Funktionsangebot bzw. die Nutzeroberfläche oder die angebotenen Informationen vom Bediener abhängig gestalten zu können, ist es notwendig, daß sich der Bediener bei dem jeweiligen Gerät identifiziert. In diesen Fällen können das Angebot und die Benutzerführung auf die jeweilige Bedienperson ausgerichtet werden. Eine solche Identifizierung erfolgt bei Geräten, die von mehreren Personen benutzt werden, in der Regel durch eine Password- oder PIN-Eingabe. Der jeweilige Bediener muß sich vor einem Benutzungsvorgang in das Gerät unter Eingabe seiner PIN- oder seines Passwords einloggen. Nach Beendigung der sogenannten Fashion muß sich die Bedienperson wieder ausloggen. Ein weiterer Bediener kann sich dann unter Eingabe seiner PIN oder Passwords wieder einloggen.
US 5,881,366 offenbart mobile Eingabeeinrichtungen, bei denen Identifikationscodes an einen Host Computer übertragen werden. Die Identifikationscodes werden ausschließlich für die Unterscheidung der Eingabeeinrichtungen selbst verwendet.
Der Artikel "Secure Mouse for Internet", IBM Technical Disclosure Bulletin, Bd. 40,12. Dezember 1997 (XP 000754 084) (XP 000754 084) offenbart ein Verfahren zur Computersicherheit, bei dem eine Maus verwendet wird, die Benutzeridentfikations-(ID)-Informationen enthält.

Es ist Aufgabe der vorliegenden Erfindung, eine Alternative zu diesem Stand der Technik zu schaffen, bei der ohne daß eine Person einen speziellen Einlogvorgang durchführen muß, bei dem eine PIN oder ein Password eingegeben werden muß, das Gerät benötigte Informationen über eine Bedienperson erhält.

Diese Aufgabe wird durch ein Verfahren zur Bedienung eines Geräts mit einer mobilen Eingabeeinrichtung gelöst, bei dem die Eingabeeinrichtung einen Codespeicher mit einem darin abgespeicherten Code aufweist und dieser Code bei einer Bedienung des Geräts an das Gerät übertragen wird.

Der Code ist dabei für den Bediener, welcher das Gerät unter der Verwendung der Eingabeeinrichtung bedient, spezifisch. Das heißt, der Code enthält diverse Informationen über den Bediener. Es kann sich hierbei um einen einfachen Code handeln, in dem lediglich beispielsweise das Alter, das Geschlecht, eine Funktionsstufe oder eine Profession des Bedieners verschlüsselt ist. Es kann sich jedoch auch um einen eindeutig identifizierenden Code handeln, der auf genau diesen speziellen Bediener hinweist.

Feiner wirkt die Eingabeeinrichtung zur Bedienung des Geräts mit einer sensitiven Eingabeoberfläche des Geräts zusammen.

Bei der mobilen Eingabeeinrichtung kann es sich im Prinzip um jede Form von Eingabeeinrichtung wie Tastatur, Joystick etc. handeln, die von der Bedienperson mitgenommen und an dem jeweiligen Gerät eingesetzt wird. Vorteilhafterweise handelt es sich hierbei um eine Eingabeeinrichtung, die über eine drahtlose Schnittstelle mit dem Gerät kommuniziert.

Durch die Zuordnung eines speziellen Codes zur Eingabeeinrichtung und durch die Verwendung von verschiedenen mobilen Eingabeeinrichtungen, wobei jedem Bediener eine eigene mobile Eingabeeinrichtung zugeordnet ist, kann mittels des Codes bei der Bedienung automatisch eine Einstellung des Geräts auf die Bedienperson bzw. auf die jeweilige Eingabeeinrichtung der Bedienperson erfolgen.

Der Code wird dabei vorteilhafterweise ebenfalls über eine drahtlose Schnittstelle, beispielsweise eine Infrarot-Schnittstelle oder ein Bluetooth-Modul übertragen. Es kann sich hierbei um eine separate, speziell für die Übertragung des Codes vorgesehene Schnittstelle handeln. Es kann sich aber auch um dieselbe Schnittstelle handeln, wie sie von der Eingabeeinrichtung ohnehin verwendet wird, um die verschiedenen Auswahl- und Bestätigungssignale an das Gerät zu übermitteln.

Bei dieser sensitiven Eingabeoberfläche kann es sich beispielsweise um ein berührungssensitives Display oder ein entsprechendes Eingabe- bzw. Zeichentableau handeln. Es kann sich selbstverständlich auch um eine Oberfläche handeln, die berührungslos reagiert, sobald die Eingabeeinrichtung einen bestimmten Abstand zur Oberfläche unterschritten hat.

Bei einer solchen Eingabeeinrichtung kann es sich beispielsweise um einen Eingabestift, einen sogenannten "Pen", handeln, der mit der Displayoberfläche des Geräts so zusammenwirkt, daß bei einer Berührung der Displayoberfläche an einer bestimmten Position der dort angebotene Befehl ausgewählt und/oder bestätigt wird.

Bei einem bevorzugten Ausführungsbeispiel wird der Code automatisch beim Übersenden bzw. Auslösen eines Auswahl-und/oder Bestätigungssignals von der Eingabeeinrichtung an das Gerät übertragen. Dies kann beispielsweise bei der Verwendung eines Stifts auf einer berührungssensitiven Eingabeoberfläche so realisiert werden, daß immer dann, wenn der Stift, bzw. dessen Sensor, die Eingabeoberfläche berührt, automatisch der Code an das Gerät übertragen wird. Dieses Verfahren kann selbstverständlich in ähnlicher Weise auch bei der oben genannten berührungslos arbeitenden sensitiven Oberfläche eingesetzt werden. Die Übertragung kann z. B. über eine separate, im Stift untergebrachte Funkschnittstelle, beispielsweise ein Bluetooth-Modul, an eine entsprechende Funkschnittstelle des Geräts oder mittels berührungsloser Smartcard-Technologie erfolgen.

Eine andere Alternative besteht darin, daß das Gerät immer dann, wenn es den Code benötigt, an die Eingabeeinrichtung ein Abfragesignal sendet und daraufhin von der Eingabeeinrichtung der Code an das Gerät übertragen wird.

Das Gerät steuert dann in Abhängigkeit vom übertragenen Code eine Bedieneroberfläche oder gibt in Abhängigkeit vom Code selektierte Informationen aus. Im Prinzip kann der Code auch nur zur Protokollierung verwendet werden, um festzustellen, welcher Bediener wann mit dem Gerät gearbeitet hat oder welche Gruppe von Bedienern bzw. Nutzern, beispielsweise Bediener einer bestimmten Altersgruppe, welche Informationen abgerufen haben.

Bei einem besonders bevorzugten Ausführungsbeispiel kann der Code frei eingegeben oder verändert werden. Hierzu weist die Eingabeeinrichtung entsprechende Mittel auf, beispielsweise in Form von Miniaturschaltern. Eine vorteilhafte Alternative hierzu besteht darin, daß die Eingabeeinrichtung eine Schnittstelle aufweist, mit welcher die Eingabeeinrichtung an eine Codiereinrichtung angeschlossen wird, die ebenfalls über eine entsprechende Schnittstelle verfügt. Ober die Codiereinrichtung kann dann der Code in den Codespeicher der Eingabeeinrichtung eingegeben werden. Bei der Codiereinrichtung kann es sich im Prinzip um einen Rechner mit einer passenden Schnittstelle handeln. Bei der Schnittstelle kann es sich um eine Drahtschnittstelle oder um eine drahtlose Schnittstelle handeln. Selbstverständlich ist es auch möglich, dieselbe Schnittstelle zu verwenden, mit der auch der Code an das zu bedienende Gerät übertragen wird.

Ein erfindungsgemäßes System besteht aus mindestens einem Gerät, welches mit einer entsprechenden Eingabeeinrichtung bedienbar ist, sowie aus mehreren Eingabeeinrichtungen, die jeweils den Bedienpersonen zugeordnet sind. Zusätzlich kann das System eine entsprechende Codiereinrichtung zur Codierung der Eingabeeinrichtungen aufweisen.

Die Erfindung wird im folgenden unter Hinweis auf die beigefügte Zeichnung anhand von Ausführungsbeispielen näher erläutert. Die dargestellten Merkmale können nicht nur in den genannten Kombinationen, sondern auch einzeln oder in anderen Kombinationen erfindungswesentlich sein. Es stellen dar:
Figur 1 eine schematische Darstellung eines erfindungsgemäßen Geräts in Form eines Terminals mit sensitiver Oberfläche und einer erfindungsgemäßen Eingabeeinrichtung in Form eines Eingabestifts,
Figur 2 eine schematische Darstellung einer Codiereinrichtung mit einer Schnittstelleneinheit, in welcher die Eingabeeinrichtungen zur Codierung eingesteckt sind.

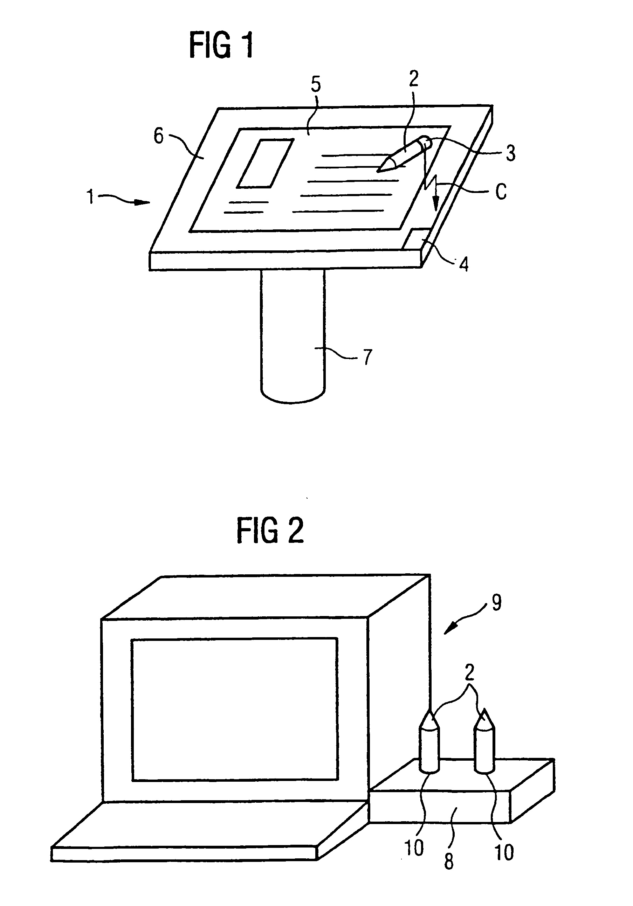

Bei dem in Figur 1 dargestellten Ausführungsbeispiel eines Geräts zur Durchführung des erfindungsgemäßen Verfahrens handelt es sich um ein Informationsterminal 1. Dieses Informationsterminal 1 besteht aus einem Tableau 6 mit einer berührungssensitiven Displayoberfläche 5. Das Tableau 6 ist auf einem Ständer 7 ortsfest angebracht. Derartige Informationsterminals 1 können zum Beispiel an verschiedenen Stellen in Messen und Ausstellungen, insbesondere Informationsgroßveranstaltungen wie die EXPO, Museen, Zoos oder dergleichen, angeordnet sein.

Ein solches Terminal 1 ist über die berührungssensitive Displayoberfläche 5 mittels einer Eingabeeinrichtung 2 in Form eines Eingabestiftes 2 bedienbar. Bei der berührungssensitiven Oberfläche 5 kann es sich beispielsweise um eine kapazitiv oder induktiv arbeitende Oberfläche 5 handeln, die mit dem Eingabestift 2 so zusammenwirkt, daß bei einer Berührung der Oberfläche 5 mit dem Eingabestift 2 der an der Berührungsstelle auf der Displayoberfläche 5 dargestellte Befehl ausgewählt oder bestätigt wird.

Der Eingabestift 2 ist nicht Bestandteil des Terminals 1. Diese Stifte 2 werden den Nutzern der Terminals 1, d. h. im vorliegenden Fall den Ausstellungsbesuchern, zugeteilt. In jedem der Eingabestifte 2 befindet sich ein Codespeicher mit einem darin abgespeicherten Code C. Bei einer Benutzung des Eingabestiftes 2 an einem Terminal 1 wird dieser Code C an das Terminal 1 übertragen, welches daraufhin in Abhängigkeit von dem jeweiligen Code C die Bedieneroberfläche 5 steuert bzw. in Abhängigkeit vom jeweiligen Code C selektierte Informationen ausgibt.

Der Code C ist wiederum vom jeweiligen Bediener abhängig. Es kann sich hierbei um einen Code C handeln, der den Bediener genau identifiziert. Es kann sich aber auch um einen einfachen Code C handeln, welcher lediglich eine bestimmte Information, die für die Informationsausgabe relevant ist, an das Terminal 1 übergibt. Beispielsweise kann dieser Code C Informationen über das Alter, das Geschlecht oder den Beruf der Person enthalten. Darüber hinaus kann er Informationen darüber enthalten, ob die Person an einer Seh- oder Hörschwäche leidet, und dementsprechend kann das Terminal die Art der Darstellung auf dem Display oder die Lautstärke eines Lautsprechers anpassen.

Eine altersabhängige Informationsausgabe kann beispielsweise bedeuten, daß bei der Benutzung eines entsprechenden Eingabestifts 2 durch ein Kind die Informationen auf dem Terminal 1 kindgerecht dargestellt werden, wogegen eine erwachsene Person die Informationen ggf. umfangreicher und komplizierter dargestellt bekommt. Bestimmte Berufsgruppen oder Interessentengruppen können ggf. noch spezielle Informationen abrufen, wobei die Einstellung so erfolgen kann, daß bei nichtinteressierten Kreisen, die einen Eingabestift 2 mit einem anderen Code C verwenden, diese Personen nicht mit unerwünschten Informationen belastet werden.

Die Übertragung des Codes C vom Eingabestift 2 an das Terminal 1 erfolgt bei dem dargestellten Ausführungsbeispiel über eine kurzreichweitige Funkschnittstelle, beispielsweise über im Eingabestift 2 und im Tableau 6 des Terminals 1 angeordnete Bluetooth-Module 3, 4. Die Übertragung des Codes C von der Schnittstelle 3 des Eingabestiftes 2 an die Schnittstelle 4 des Terminals 1 erfolgt automatisch immer dann, wenn mit dem Eingabestift 2 die sensitive Oberfläche 5 berührt wird und ein Auswahl- und/oder Bestätigungsbefehl gegeben wird.

Figur 2 zeigt eine Codiereinrichtung 9 mit einer Schnittstelleneinheit 8. Eine derartige Codiereinrichtung 9 befindet sich beispielsweise am Eingang der Ausstellung. Hier werden die Eingabestifte 2 mit einem dem jeweiligen Besucher entsprechenden Code C versehen. Die Schnittstelleneinheit 8 kann hierbei Halterungen 10 für mehrere Eingabestifte 2 vorsehen, so daß gleichzeitig mehrere Eingabestifte codiert werden können. Dies hat den Vorteil, daß die gesamte Anzahl der in der Ausstellung benötigten Eingabestifte 2 reduziert werden kann, da nicht unnötig viele Stifte mit festen Codes für unterschiedliche Besuchertypen zur Verfügung stehen müssen.

In dem vorliegenden Ausführungsbeispiel weist der Eingabestift 2 hierzu an seinem hinteren Ende entsprechende Kontakte auf (nicht dargestellt), die in der Halterung 10 der Schnittstelleneinheit 8 auf entsprechende Gegenkontakte treffen. Über diese Schnittstelle ist der Code C in den Codespeicher des Eingabestifts 2 einspeicherbar. Da die Stifte 2 zur Versorgung der Funkschnittstelle 3 eine Spannungsversorgung benötigen, kann gleichzeitig in der Schnittstelleneinheit 8 auch eine Aufladung eines Akkus erfolgen, der für eine Spannungsversorgung der Funkschnittstelle 3 vorgesehen ist.

Selbstverständlich ist es auch möglich, an dem Eingabestift 2 jeweils werksseitig einen bestimmten Code C fest einzustellen, wobei z. B. im einfachsten Fall bestimmte Eingabestifte für Kinder und bestimmte Eingabestifte für Erwachsene vorgesehen sind. Eine weitere Möglichkeit besteht darin, daß der Eingabestift 2 einen oder mehrere kleine Miniaturschalter aufweist, womit eine Einstellung des Stiftcodes C möglich ist.

Bei einem weiteren, nicht dargestellten Ausführungsbeispiel handelt es sich bei den zu bedienenden Geräten um tragbare Tableaus mit einer sensitiven Displayoberfläche. Diese tragbaren Tableaus werden wiederum mit einem Eingabestift bedient. Bei den Tableaus handelt es sich entweder um vollständige Rechner nach Art eines Laptops oder um Terminals eines größeren Rechnersystems, die über Funk an den Rechner angeschlossen sind.

Ein möglicher Einsatzbereich für derartiges Tableaus wäre beispielsweise ein Krankenhaus, wo dem Personal die Tableaus als Geräte frei verwendbar zur Verfügung stehen. Jede Person besitzt einen eigenen Eingabestift mit einem speziell diese Person identifizierenden Code. Mittels des codierten Eingabestiftes und einem beliebigen transportablen Tableau kann die Person dann jederzeit die gewünschten Daten, beispielsweise die Daten eines speziellen Patienten, aus einem Rechner abrufen. Über die Codierung des Eingabestiftes kann dabei genau festgelegt sein, welcher Person des Personals welche Patientendaten in welcher Form zugänglich gemacht werden.

## Patentansprüche

1. Verfahren zur Bedienung eines Geräts (1) mit einer mobilen Eingabeeinrichtung (2) dieses Geräts (1), wobei die Eingabeeinrichtung (2) einen Codespeicher mit einem darin abgespeicherten Code (C) aufweist und dieser Code (C) bei einer Bedienung des Geräts (1) an das Gerät (1) übertragen wird, und der Code (C) für einen Bediener, welcher das Gerät (1) unter verwendung der Eingabeeinrichtung (2) bedient, spezifisch ist **dadurch gekennzeichnet, daß** die Eingabeeinrichtung (2) zur Bedienung des Geräts (1) mit einer sensitiven Eingabeoberfläche (5) des Geräts (1) zusammenwirkt.

2. Verfahren nach Anspruch 1, **dadurch gekennzeichnet, daß** der Code (C) automatisch beim Übersenden und/oder Auslösen eines Auswahl- und/oder Bestätigungssignals von der Eingabeeinrichtung (2) an das Gerät (1) übertragen wird.

3. Verfahren nach Anspruch 1 oder 2, **dadurch gekennzeichnet, daß** das Gerät (1) an die Eingabeeinrichtung (2) ein Abfragesignal sendet und daraufhin von der Eingabeeinrichtung (2) der Code (C) an das Gerät (1) übertragen wird.

4. Verfahren nach einem der Ansprüche 1 bis 3, **dadurch gekennzeichnet, daß** der Code (C) über eine drahtlose Schnittstelle (3, 4) übertragen wird.

5. Verfahren nach einem der Ansprüche 1 bis 4, **dadurch gekennzeichnet, daß** das Gerät (1) in Abhängigkeit vom übertragenen Code (C) eine Bedieneroberfläche (5) steuert und/oder in Abhängigkeit vom Code (C) selektierte Informationen ausgibt.

6. Verfahren nach einem der Ansprüche 1 bis 5, **dadurch gekennzeichnet, daß** der Code (C) im Codespeicher der Eingabeeinrichtung frei eingegeben und/oder verändert werden kann.

7. Verfahren nach Anspruch 6, **dadurch gekennzeichnet, daß** der Code (C) im Codespeicher der Eingabeeinrichtung mittels einer Codiereinrichtung (9) über eine Schnittstelle frei eingegeben oder verändert wird.

8. Mobile Eingabeeinrichtung (2) zur Bedienung eines Geräts (1) gemäß einem Verfahren nach einem der vorstehenden Ansprüche, umfassend einen Codespeicher mit einem darin gespeicherten, der Eingabeeinrichtung (2) zugeordneten Code (c) und Mittel (3) zur Übersendung des gespeicherten Codes (C) an das Gerät (1), und der Code (C) für einen Bediener, welcher das Gerät (1) unter Verwendung der Eingabeeinrichtung (2) bedient, spezifisch ist **dadurch gekennzeichnet, daß** die Eingabeeinrichtung (2) einen Eingabestift (2) umfaßt, der mit der sensitiven Eingabeoberfläche (5) des Geräts (1) zusammenwirkt.

9. Eingabeeinrichtung (2) nach Anspruch 8, **dadurch gekennzeichnet, daß** die Mittel (3) zur Übersendung des Codes (C) eine drahtlose Schnittstelle (3) umfassen.

10. Eingabeeinrichtung (2) nach einem der Ansprüche 8 oder 9, **dadurch gekennzeichnet, daß** der Code (C) für einen Bediener, welcher das Gerät (1) unter Verwendung der Eingabeeinrichtung (2) bedient, spezifisch ist.

11. Eingabeeinrichtung (2) nach einem der Ansprüche 8 bis 10, **gekennzeichnet durch** Mittel zur Eingabe und/oder zum Verändern des gespeicherten Codes (C).

12. Eingabeeinrichtung (2) nach einem der Ansprüche 8 bis 11, **dadurch gekennzeichnet, daß** die Mittel zur Eingabe und/oder zum Verändern des gespeicherten Codes (C).eine Schnittstelle zum Anschluß an eine Codiereinrichtung (9) umfassen, welche den Code (C) an die Eingabeeinrichtung (2) zur Speicherung in dem Codespeicher überträgt.

13. Gerät (1), zur Durchführung eines Verfahrens nach einem der Ansprüche 1 bis 7, mit Mitteln (4) zum Empfang und zur Erkennung des von der Eingabeeinrichtung (2) übersandten, der Eingabeeinrichtung (2) zugeordneten Codes (C), **gekennzeichnet durch** eine sensitive Eingabeoberfläche (5), die mit der Eingabeeinrichtung (2) zur Bedienung des Geräts (1) zusammenwirkt.

14. Gerät (1) nach Anspruch 13, **dadurch gekennzeichnet, daß** die Mittel (4) zum Empfang des Codes (C) eine drahtlose Schnittstelle (4) umfassen.

15. Gerät (1) nach Anspruch 13 oder 14, **dadurch gekennzeichnet, daß** die sensitive Eingabeoberfläche (5) ein sensitives Display (5) umfaßt.

16. Gerät (1) nach einem der Ansprüche 13 bis 15, **dadurch gekennzeichnet, daß** das Gerät (1) ein Datenverarbeitungsgerät oder ein Terminal (1) ist.

17. Codiereinrichtung (9) zur Durchführung des Verfahrens nach Anspruch 6, mit einer Schnittstelle zur Übertragung eines Codes (C) in den Codespeicher einer Eingabeeinrichtung (2) nach einem der Ansprüche 8 bis 12.

18. System bestehend aus mindestens einem Gerät (1) nach einem der Ansprüche 8 bis 12 und aus mehreren mobilen Eingabeeinrichtungen (2) nach einem der Ansprüche 9 bis 12.

19. System nach Anspruch 18, **gekennzeichnet durch** eine Codiereinrichtung (9) nach Anspruch 17.

## Claims

1. Method for operating an apparatus (1) using a mobile input device (2) of this apparatus (1), the input device (2) having a code memory with a code (C) stored therein, and this code (C) being transmitted to the apparatus (1) when the apparatus (1) is operated, and the code (C) is specific to a user who operates the apparatus (1) using the input device (2), **characterized in that** the input device (2) cooperates with a sensitive input interface (5) of the apparatus (1) for operating the apparatus (1).

2. Method according to claim 1, **characterized in that** the code (C) is automatically transmitted from the input device (2) to the apparatus (1) when a selection signal and/or confirmation signal is/are transmitted and/or triggered.

3. Method according to claim 1 or 2, **characterized in that** the apparatus (1) sends a query signal to the input device (2), whereupon the input device (2) transmits the code (C) to the apparatus (1).

4. Method according to one of claims 1 to 3, **characterized in that** the code (C) is transmitted via a wireless interface (3, 4).

5. Method according to one of claims 1 to 4, **characterized in that** the apparatus (1) controls a user interface (5) as a function of transmitted code (C) and/or outputs selected information as a function of code (C).

6. Method according to one of claims 1 to 5, **characterized in that** the code (C) may be freely entered and/or changed in the code memory of the input device.

7. Method according to claim 6, **characterized in that** the code (C) is freely entered and/or changed in the code memory of the input device via an interface by means of an encoding device (9).

8. Mobile input device (2) for operating an apparatus (1) according to a method according to one of the preceding claims, comprising a code memory having a code (C) which is stored therein and associated with the input device (2), and means (3) for transmitting the stored code (C) to the apparatus (1), and the code (C) is specific to a user who operates the apparatus (1) using the input device (2), **characterized in that** the input device (2) comprises a stylus (2) which cooperates with the sensitive input interface (5) of the apparatus (1).

9. Input device (2) according to claim 8, **characterized in that** the means (3) for transmitting the code (C) comprise a wireless interface (3).

10. Input device (2) according to one of claims 8 or 9, **characterized in that** the code (C) is specific to a user who operates the apparatus (1) using the input device (2).

11. Input device (2) according to one of claims 8 to 10, **characterized by** means for inputting and/or for changing the stored code (C).

12. Input device (2) according to one of claims 8 to 11, **characterized in that** the means for inputting and/or for changing the stored code (C) comprise an interface for connecting to an encoding device (9) which transmits the code (C) to the input device (2) for storage in the code memory.

13. Apparatus (1) for carrying out a method according to one of claims 1 to 7, having means (4) for receiving and for recognizing the code (C) which is transmitted by the input device (2) and associated with the input device (2),
**characterized by** a sensitive input interface (5) which cooperates with the input device (2) for operating the apparatus (1).

14. Apparatus (1) according to claim 13, **characterized in that** the means (4) for receiving the code (C) comprise a wireless interface (4).

15. Apparatus (1) according to claim 13 or 14, **characterized in that** the sensitive input interface (5) comprises a sensitive display (5).

16. Apparatus (1) according to one of claims 13 to 15, **characterized in that** the apparatus (1) is a data processing apparatus or a terminal (1).

17. Encoding device (9) for carrying out the method according to claim 6, having an interface for transmitting a code (C) into the code memory of an input device (2) according to one of claims 8 to 12.

18. System consisting of at least one apparatus (1) according to one of claims 8 to 12, and consisting of a plurality of mobile input devices (2) according to one of claims 9 to 12.

19. System according to claim 18, **characterized by** an encoding device (9) according to claim 17.

## Revendications

1. Procédé d'utilisation d'un appareil (1) comportant un dispositif d'entrée mobile (2) de cet appareil (1), le dispositif d'entrée (2) présentant une mémoire de code dans laquelle un code (C) est mémorisé et ce code (C) est transmis à l'appareil (1) lors d'une utilisation de l'appareil (1), le code (C) étant particulier à un utilisateur, lequel utilise l'appareil (1) en se servant du dispositif d'entrée (2), **caractérisé par le fait que** le dispositif d'entrée (2) destiné à l'utilisation de l'appareil (1) coopère avec une surface d'entrée tactile (5) de l'appareil (1).

2. Procédé selon la revendication 1, **caractérisé par le fait que** le code (C) est transmis automatiquement du dispositif d'entrée (2) à l'appareil (1) lors de l'envoi et/ou du déclenchement d'un signal de sélection et/ou d'actionnement.

3. Procédé selon l'une des revendications 1 ou 2, **caractérisé par le fait que** l'appareil (1) envoie au dispositif d'entrée (2) un signal d'interrogation et, en réponse, le code (C) est transmis du dispositif d'entrée (2) à l'appareil (1).

4. Procédé selon l'une des revendications 1 à 3, **caractérisé par le fait que** le code est transmis par l'intermédiaire d'une interface sans fil (3, 4).

5. Procédé selon l'une des revendications 1 à 4, **caractérisé par le fait que** l'appareil (1) commande une surface de service utilisateur (5) en fonction du code (C) transmis et/ou sort des informations sélectionnées en fonction du code (C).

6. Procédé selon l'une des revendications 1 à 5, **caractérisé par le fait que** le code (C) contenu dans la mémoire de code du dispositif d'entrée peut être librement entré et/ou modifié.

7. Procédé selon la revendication 6, **caractérisé par le fait que** le code (C) contenu dans la mémoire de code du dispositif d'entrée est librement entré ou modifié au moyen d'un dispositif de codage (9) par l'intermédiaire d'une interface.

8. Dispositif d'entrée mobile (2) servant à utiliser un appareil (1) conformément à un procédé selon l'une des revendications précédentes, comprenant une mémoire de code dans laquelle est mémorisé un code (C) correspondant au dispositif d'entrée (2) et des moyens (3) destinés à envoyer le code mémorisé (C) à l'appareil (1), le code (C) étant particulier à un utilisateur qui utilise l'appareil (1) en se servant du dispositif d'entrée (2), **caractérisé par le fait que** le dispositif d'entrée (2) comprend un stylet d'entrée (2) qui coopère avec la surface d'entrée tactile (5) de l'appareil (1).

9. Dispositif d'entrée (2) selon la revendication 8, **caractérisé par le fait que** les moyens (3) destinés à l'envoi du code (C) comprennent une interface sans fil (3).

10. Dispositif d'entrée (2) selon l'une des revendications 8 ou 9, **caractérisé par le fait que** le code (C) est particulier à un utilisateur qui utilise l'appareil (1) en se servant du dispositif d'entrée (2).

11. Dispositif d'entrée (2) selon l'une des revendications 8 à 10, **caractérisé par** des moyens destinés à entrer et/ou à modifier le code (C) mémorisé.

12. Dispositif d'entrée (2) selon l'une des revendications 8 à 11, **caractérisé par le fait que** les moyens destinés à entrer et/ou à modifier le code (C) mémorisé comprennent une interface destinée à les connecter à un dispositif de codage (9) qui transmet le code (C) au dispositif d'entrée (2) pour la mémorisation dans la mémoire de code.

13. Appareil (1) pour la mise en oeuvre d'un procédé selon l'une des revendications 1 à 7, comportant des moyens (4) destinés à la réception et à la reconnaissance du code (C) envoyé par le dispositif d'entrée (2) et correspondant au dispositif d'entrée (2), **caractérisé par** une surface d'entrée tactile (5) qui coopère avec le dispositif d'entrée (2) destiné à l'utilisation de l'appareil (1).

14. Appareil (1) selon la revendication 13, **caractérisé par le fait que** les moyens (4) destinés à la réception du code (C) comprennent une interface sans fil (4).

15. Appareil (1) selon l'une des revendications 13 ou 14, **caractérisé par le fait que** la surface d'entrée tactile (5) comprend un écran tactile (5).

16. Appareil (1) selon l'une des revendications 13 à 15, **caractérisé par le fait que** l'appareil (1) est un appareil de traitement de données ou un terminal (1).

17. Dispositif de codage (9) pour la mise en oeuvre du procédé selon la revendication 6, comportant une interface destinée à transmettre un code (C) à la mémoire de code d'un dispositif d'entrée (2) selon l'une des revendications 8 à 12.

18. Système composé d'au moins un appareil (1) selon l'une des revendications 8 à 12 et de plusieurs dispositifs d'entrée mobiles (2) selon l'une des revendications 9 à 12.

19. Système selon la revendication 18, **caractérisé par** un dispositif de codage (9) selon la revendication 17.
